# EUROPEAN PATENT APPLICATION

(11) **EP 1 434 391 A2**
(43) Date of publication of application: **30.06.2004**
(21) Application number: 03258218.1
(22) Date of filing: 23.12.2003
(51) Int. Cl.: H04L 12/28

(54) **Method and device for prefetching frames**

(30) Priority: 23.12.2002 GB 0230031
(71) Applicant: SYNAD TECHNOLOGIES LIMITED, Theale, Reading Berkshire, RG7 4SA (GB)
(72) Inventor: Teague, Roger Herbert, Nr. Thatcham, Berkshire RG19 9EG (GB)
(74) Representative: Frost, Alex John

(57) **Abstract**

A method of communicating between a transmitter and a receiver in a WLAN is disclosed. The transmitter has a Medium Access Control (MAC) layer. Data to be sent from the transmitter to the receiver is placed in a first data queue during a first period of time, and in a second data queue during a second period of time. Whilst the second queue is being filled from the MAC layer during the second time period, the data stored in the first queue is being filled from the MAC layer during the first time period, the data in the second queue is transmitted to the receiver. Thus there is provided an efficient co-ordination and transmission of data frames from wireless devices, and a high performance flow of traffic between clients and APs.

## Description

### FIELD OF THE INVENTION

The current invention relates to a method and device for communicating and queuing data frames between media control access (MAC) layers, particularly, although not exclusively for wireless Local Area Networks (LANs).

### BACKGROUND TO THE INVENTION

The Institute of Electronic and Electrical Engineers (IEEE) has developed the IEEE 802.11 standards, hereinafter referred to as '802.11', defining wireless LAN devices operable within the 2.4GHz and 5GHz bands but, which can be extendable to other bands. 802.11 provides for the connectivity of a group of stations (STAs) or clients, for example a group of PCs and/or laptops, to an Access Point (AP) that provides access to other networks, such as wired networks. Within the standard, the configuration of stations with access points is known as infrastructure mode. An alternative wireless LAN architecture where the LAN does not include an AP is called an Independent Basic Service Set (IBSS).

The 802.11 standard outlines the media access control (MAC) and the physical layer (PHY) layer specifications for wireless LANs. A wireless network enables the transfer of information from one device to another by accessing a medium, which provides a data transmission path. The 802.11 Medium Access Control (MAC) protocol defines how stations share a common medium; while synchronisation and error control protocols ensure that data transfer within each link in the network is intact. In addition, 802.11 provides for data encryption services for secure data transmission, mechanisms for transferring the data from the source to the recipient, and connectivity software for interfacing an appliance to application software on a server.

Before transmitting a frame, the MAC co-ordination of an 802.11 wireless LAN takes measures to avoid collisions by using one of two protocols. For example, carrier sense multiple access/collision avoidance (CSMA/CA). Within the 802.11 standard this mode is specified as the Distributed Coordination Function (DCF), which is a contention-based protocol. Another mode is the priority-based Point Coordination Function (PCF), which is a contention-free access protocol for infrastructure mode configurations. Both PCF and DCF mode would be familiar the skilled addressee.

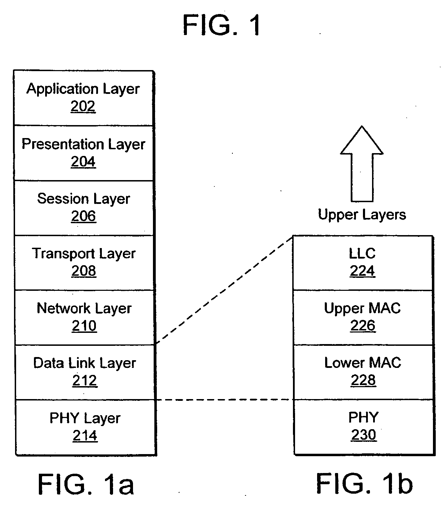

Figure 1a shows the protocol layers for a non-access point station, for example, a host computer, a personal digital assistant and the like, in accordance with the standard seven layer Open System Interconnection (OSI). Referring to figure 1b, the IEEE local area networks wireless network utilises the lower three protocol layers as defined within the OSI architecture 200.

Within the host computer in figure 1, the frames are transferred from the upper protocol layers: application 202, presentation 204, session 206, transport 208 and the network layer 210; to the lower data link layers 212 having a logical link control layer 224, upper MAC 226 and lower MAC 228; and the physical PHY layer 230. The PHY layer 214 (230) of the OSI architecture performs modulation/demodulation of the data for transmission/reception at, for example, the host computer 220 for communication across the medium to another station.

Current advances include the development of software that separates the functionalities within the MAC layer to enhance the efficiency of data flow. For example, one part of the MAC handles the real time constraints of the protocol including beacons, synchronisation and the like, while another part of the MAC handles the non-real time aspects of the protocol stack, such as encryption/de-encryption. The problem with this arrangement is that part of the MAC responsible for the non time-critical functionalities may not be able to respond quickly enough to supply data frames to another part of the MAC.

This problem is considered to be a real-time software programming issue, wherein to supply an interface with data at a sufficiently fast enough rate the software must be written efficiently. The objects of the current invention provides an advantageous solution to this problem by introducing temporal factors within the MAC layer, that enhance flow of data therein.

### SUMMARY OF THE INVENTION

According to a first aspect of the present invention there is provided a method of communicating at least one data block between a Wireless Local Area Network transmitter containing a Media Access Control layer, and a receiver, the method comprising: transmitting, at least one first data block from the Media Access Control layer to a first data queue during a first time interval, for subsequent communication, to the receiver; transmitting, at least one second data block from the Media Access Control layer to a second data queue during a second time interval for subsequent communication to the receiver; and communicating, to the receiver, the first data block stored in the first data queue during the second time interval when the second data queue is being filled from the Media Access Control layer, and communicating to the receiver, the second data block stored in the second data queue during the first time period when the first data queue is being filled from the Media Access Control layer.

This is advantageous over the prior art because this provides for the efficient co-ordination and transmission of data frames from wireless devices. Additional advantages include the provision of high-performance flow of traffic between clients and access points, and between stations, with the high performance of traffic within the wireless LAN typically less that 1 microsecond.

Preferably, the Media Access Control layer may be divided into manageable sublayers, wherein the data blocks exchanged between MAC layers of the same station and different stations may be data frames or fragmented frames.

In a second aspect of the present invention, there is provided a wireless Local Area Network client containing a Media Access Control layer, the client further comprising: a first data queue arranged to store at least one first data block transmitted from the Media Access Control layer during a first time interval, for subsequent communication, to a receiver; a second data queue arranged to store at least one second data block transmitted from the Media Access Control layer during a second time interval for subsequent communication to the receiver; and a transmitter arranged to communicate, to the receiver, the first data block stored in the first data queue during the second time interval when the second data queue is being filled from the Media Access Control layer, and communicating to the receiver, the second data block stored in the second data queue during the first time period when the first data queue is being filled from the Media Access Control layer.

The method of communicating may further comprise: returning to the Media Access Control layer, at least one of any of the first data blocks not communicated to the receiver during the second repeatable time interval; requesting, from the Media Access Control layer, the at least one first data blocks during a predetermined time before expiration of said second time interval; and requesting, from the Media Access Control layer, the at least one of the second data blocks during a predetermined time before the expiration of said first time interval.

Preferably, a computer program on a carrier including software is arranged to perform the steps of the method, and operable within the processing means of a wireless LAN transceiver.

It is further preferred that the within the Media Access Layer Control layer of the client, the first data queue is further arranged to return to the Media Access Control layer, at least one first data block not communicated during the second repeatable time interval; the second data queue is further arranged to return to the Media Access Control layer at least one second data block not communicated during the first repeatable time interval; wherein the transmitter is arranged to request, from the Media Access Control layer, the at least one first data block a predetermined time before expiration of said second repeatable time interval; and the transmitter is arranged to request, from the Media Access Control layer, the at least one second data block a predetermined time before the expiration of said first repeatable time interval.

Preferably the Wireless Local Area Network comprises at least one access point in communication with a client.

### BRIEF DESCRIPTION OF THE DRAWINGS

To aid in understanding the present invention a preferred embodiment will be described, by way of example only, with reference to the accompanying drawings in which
Figure 1a shows protocol layers as defined within the standard seven-layer Open System Interconnection (OSI) architecture;
Figure 1b shows the lower three protocol layers as defined within the seven-layer OSI architecture;
Figure 2 shows stations (STAs) or clients communicating via an access point (AP) through a basic service set (BSS) using the distribution system (DS);
Figure 3 shows architectural blocks of a wireless LAN transceiver according to one embodiment of the present invention;
Figure 4 shows lower protocol layers showing the split between the upper MAC and the lower MAC, and the flow of data between them according to one embodiment of the present invention.

### A DETAILED DESCRIPTION OF A PREFERRED EMBODIMENT OF THE PRESENT INVENTION

In the ensuing text, a full description of the IEEE 802.11 wireless network standard is omitted, it being understood that this forms part of the general knowledge of the skilled addressee. In addition, non-access point stations May be referred to as clients of stations, although within 802.11 both the host, for example, a computer and the access point are known as stations.

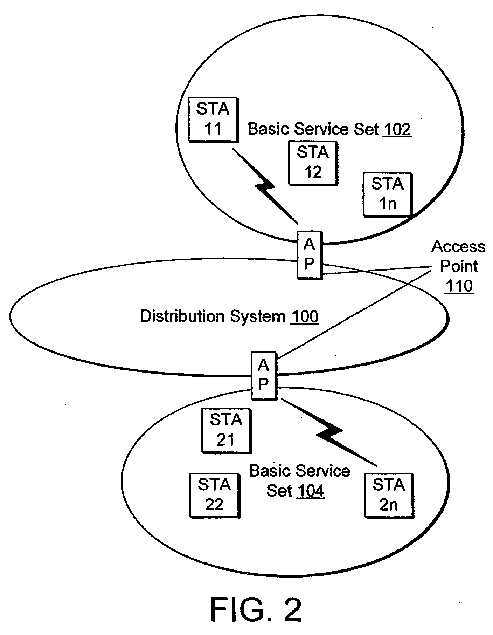

Clients or stations such as, personal computers (PCs), laptops and other portable devices incorporate Network Interface Cards (NICs) into their system architectures so as to connect wirelessly to each other. Referring to figure 2, the stations STA11, STA1n, communicate via an access point (AP) 110 with other devices within the wireless network, or the wired network in a basic service set (BSS) 102, using the distribution service of the distribution system (DS) 100. The NIC of the host PC interfaces with one or more networks such as the IEEE 802.11b and IEEE 802.11a, either as a single mode, dual mode or multi-mode connection to an AP.

All transmissions between the stations and the Access Point use a single range of frequencies called a channel. Only one station (or the Access Point) can transmit at once. In general, access to the channel is controlled using a mechanism called carrier-sense multiple access with collision avoidance CSMA/CA. This is a distributed mechanism based on a very simple concept - a station should only start to transmit a frame if the channel is not already busy.

The physical (PHY) layers of the access point and the stations sense the channels of the medium, and relay this assessment to the MAC co-ordination which determines whether the channel is busy or idle.

CSMA/CA provides pseudo-random sharing of the channel between the stations, but there are certain additional mechanisms that allow the Access Point to limit the stations' access to the channel. Such processes permit the exchange of data frames between stations, which frames may be fragmented frames under traffic conditions that will be familiar to the skilled person in the art.

Point Coordination Function (PCF) permits the transfer of frames from one station to another by contention free access protocol. In order to do this, the PCF utilises a polling mechanism. In PCF mode, the access point of the wireless LAN performs this mechanism. The access point requests or polls each station in the wireless network whether it wants to transmit frame across the network.

Therefore, PCF is operable in only infrastructure mode where stations are communicate with each other through access points, while 'ad hoc' networks have no access point; therefore, the skilled addressee would recognise that PCF co-exists with DCFs. The concept of DCF and PCF would be familiar to the skilled addressee.

In standard CSMA/CA all the stations content for access to the channel. The CFP is an alternative mechanism by which CSMA/CA is suspended, and instead each station must wait for a specific request from the Access Point, called a poll, before transmitting a frame. In general CFP will not be used all the time, but CFPs will alternate with periods during which CSMA/CA is used, called Contention Periods (CPs).

Stations are prevented from transmitting because at the beginning of the CFP they set their network allocation vector (NAV) counter to a high value. This counter gradually decrements over time, and the station is not allowed to send frames (unless polled) while this value is above zero. At the beginning of the CFP the NAV counter is set to such a high value that it will only reach zero when explicitly reset at the end of the CFP.

There is an alternative technique for setting the NAV counter in stations. This is by sending a value in the Duration field present in many frames. The receiving stations will update their NAV counters with the received value, and will queue frames until the counter counts down to zero.

The 802.11 standard provides a mechanism: request to send (RTS) and clear to send (CTS). This provides for frames specifically designed to acquire this sort of channel reservation, but there are other frames that the duration field could be sent in.

The RTS/CTS procedure was added to 802.11 to provide protection against nodes that are in range of only one of the parties in a conversation, the so-called hidden nodes. Wireless channel connection between stations is accomplished by communicating RTS and CTS frames between stations in a wireless network. For example, if a first station, the transmitter, wishes to communicate with a second station, the receiver, then the transmitter station transmits a request to send (RTS) frame.

The problem with this is that the CSMA/CA mechanism depends heavily on the ability of a station to hear other transmissions when deciding when to transmit. If a station cannot hear a transmitter itself, it will go ahead with its transmission, and a station that is in the middle will hear a garbled mixture of the two transmissions.

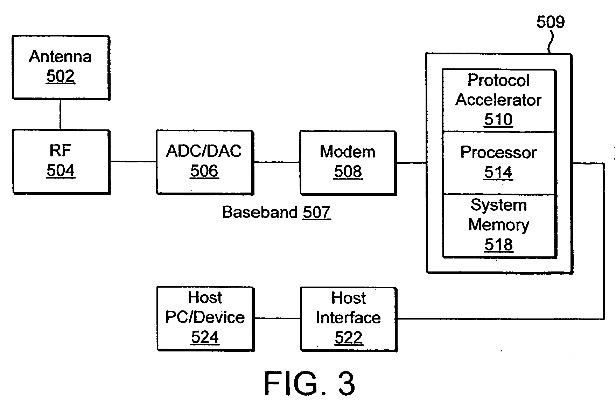

Figure 3 shows a diagram of the principle architectural blocks of a wireless LAN transceiver 500 operable in wireless LAN devices comprising: an antenna 502 for transmitting and receiving signals; radio frequency (RF) section 504 which the skilled addressee would recognise that it includes amplifiers, frequency conversion schemes and synthesisers (not shown); baseband section 507 having analogue to digital (A/D) and digital to analogue (D/A) 506 functionality, for example, for converting the baseband analogue signal to a digital signal; and modem/MAC part 508 providing the functionality for system integration.

The medium access control (MAC) processing functionalities, principally performed in the baseband part 507 of the wireless LAN transceiver 500, are supported within the central processing unit (CPU) 509 having protocol accelerator 510, processor unit 514 for providing system software, system memory unit 518 for storing and buffering data from the processor unit 514, and the host interface 522 provides the interface to the drivers and applications of the host PC/device 524. The skilled addressee would recognise that candidate host device 524 may include any device incorporating a wireless LAN transceiver, for example, network interface cards (NICs), access points (APs), and mobile terminals.

Within the 802.11 infrastructure mode, management frames initiate communications between access points and stations. Data frames, control frames and management frames are transferred between the MAC controller and the MAC manager.

Further to the foregoing description, the MAC engine 509 provides for operability within at least one wireless LAN network, and is supported by the hardware (protocol) accelerator 510 which carries out the real time tasks of interpreting received packets or frames, for example acknowledgement frames, and then preparing and responding quickly enough to deliver high data rate throughput. MAC software runs in the processor core unit 514 and data is buffered or stored therefrom in the system memory unit 518.

Referring to figure 3, the stations STA11...STA1n, communicate with other stations such as STA21...STA2n in the wireless network via an access point (AP) 110, which provides an interface to the wired network. The access point 110 provides the interface between a wired network, for example, the Ethernet, in accordance with the 802.3 standard, and a wireless network in accordance with one of the 802.11b or 802.11a standard.

As stipulated in the foregoing description, the lower MAC layer controls the co-ordination of frames having time-critical functions, while the upper MAC handles frames having non-critical time constraints. The upper MAC typically co-ordinates management frames including authentication, association and encryption and de-encryption frames. The lower MAC controls functionalities including frame transmission queues, where frames can be buffered before transmission until the wireless medium is free, and beacon frames.

In the present embodiment of the invention, if data transmission is to occur between a station, for example a host computer, and an access point, the channel is assessed using the schemes outlined above, namely PCF and DCF.

Beacon frames are short frames, which can be communicated between stations, and announce the start of the contention free period, which periods are used only when a station is polled by an AP.

If an access point polls a station, for example a host computer, data frames from the upper protocol layers are transferred to the lower MAC layers in preparation for transmission through the medium.

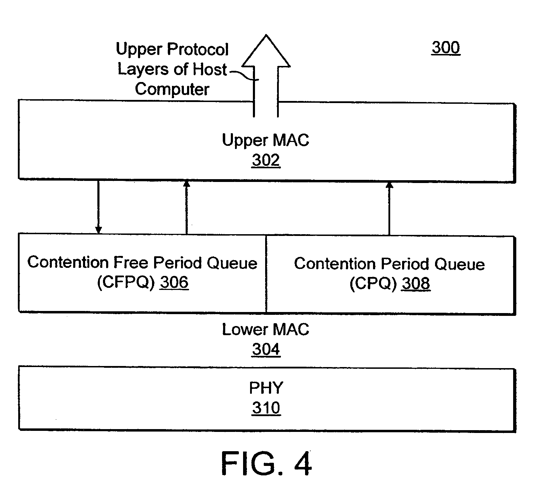

Figure 4 shows the protocol layers 300 provided within the MAC layer of an access point for providing network functionality. In accordance with the present invention the MAC layers are divided into the upper MAC 302, lower MAC 304 layers and the PHY layer 310.

In the embodiment of present invention, there is maintained two prefetched data queues in the lower MAC 304, one for the contention period (CP) and one for the contention free period (CFP), which would solve the problem of the prior art. The queues are referred to as the contention period queue (CPQ) 308 and the contention free period queue (CFPQ) 306.

A timer is maintained which is programmed to expire sufficient time before the start of the contention free period to ensure that the upper MAC 302 has time to transfer the first frame, from the host computer, for the contention free period (CFP) to the CFPQ 306. Hence, while the counter t ≠ 0, then the upper MAC 302 will transfer data to the contention free period queue CFPQ 306 where the data is buffered until the CFP is initiated. When the timer expires at t=0, the lower MAC sends a signal, called the CFP-soon signal, to the upper MAC 302 requesting the first frame.

Note that, within the standard, only one frame at a time may be transmitted between stations. Once the first frame has been transferred to the lower MAC 304, the upper MAC 302 has sufficient time to fill the remaining data entries in the CFPQ 306 in order to transmit frames to another station when the CFP begins. During the CFP, the lower MAC 304 can return the unsent frames in the CPQ 308 to the upper MAC 302.

CFPs alternate with CPs; therefore, the CP begins at the end of the CFP. At the start of the contention period there are no real time constraints; therefore, the lower MAC returns unsent frames in the CFPQ 306 to the upper MAC 302 before the upper MAC feeds it with frames for the contention period.

An advantage of the present invention of having the MAC layers separated and maintaining two queues in the lower MAC is that this provides for the efficient co-ordination and transmission of data frames from wireless devices. Further, the present invention provides for high-performance flow of traffic between the stations in accordance with the embodiment described herein. The lower MAC handles protocol time critical functions, typically less that 1 ms, while the upper MAC handles the basic service set software.

It will be appreciated by the skilled addressee, that the invention may be applied to medium access layers of single, dual and multimode transceivers, and similarly for access points. Further, it will be apparent to the skilled person in the art that various variations and modifications can be made to the described embodiments without departing from the scope of the invention.

## Claims

1. A method of communicating at least one data block between a Wireless Local Area Network transmitter containing a Media Access Control layer, and a receiver, the method comprising the steps of:
transmitting, at least one first data block from the Media Access Control layer to a first data queue during a first time interval, for subsequent communication, to the receiver;
transmitting, at least one second data block from the Media Access Control layer to a second data queue during a second time interval for subsequent communication to the receiver; and
communicating, to the receiver, the first data block stored in the first data queue during the second time interval when the second data queue is being filled from the Media Access Control layer, and communicating to the receiver, the second data block stored in the second data queue during the first time period when the first data queue is being filled from the Media Access Control layer.

2. A method as claimed in claim 1, further comprising the steps of:
returning to the Media Access Control layer, at least one of any of the first data blocks not communicated to the receiver during the second repeatable time interval.

3. A method as claimed in either of claims 1 or 2, further comprising the step of:
returning to the Media Access Control layer, at least one of any of the second data blocks not communicated to the receiver during the first repeatable time interval.

4. A method as claimed in any of claims 1 - 3, further comprising the step of:
requesting, from the Media Access Control layer, the at least one first data blocks a predetermined time before expiration of said second time interval.

5. A method as claimed in any preceding claim, further comprising the step of:
requesting, from the Media Access Control layer, the at least one second data block a predetermined time before the expiration of said first time interval.

6. A computer program including software arranged to perform any of the method steps of any preceding claim.

7. A storage device arranged to store the computer program of claim 6.

8. A carrier containing the computer program of claim 6.

9. A Wireless Local Area Network transceiver comprising:
a transmitter arranged to transmit at least one data block;
a processor arranged to operate using the computer program of claim 6.

10. A Wireless Local Area Network client containing a Media Access Control layer, the client further comprising:
a first data queue arranged to store at least one first data block transmitted from the Media Access Control layer during a first time interval, for subsequent communication, to a receiver;
a second data queue arranged to store at least one second data block transmitted from the Media Access Control layer during a second time interval for subsequent communication to the receiver; and
a transmitter arranged to communicate, to the receiver, the first data block stored in the first data queue during the second time interval when the second data queue is being filled from the Media Access Control layer, and communicating to the receiver, the second data block stored in the second data queue during the first time period when the first data queue is being filled from the Media Access Control layer.

11. A client as claimed in claim 10, wherein the first data queue is further arranged to return to the Media Access Control layer, at least one first data block not communicated during the second repeatable time interval.

12. A client as claimed in either claim 10 or 11, wherein the second data queue is further arranged to return to the Media Access Control layer at least one second data block not communicated during the first repeatable time interval.

13. A client as claimed in any of claims 10 - 12 wherein the transmitter is arranged to request, from the Media Access Control layer, the at least one first data block a predetermined time before expiration of said second repeatable time interval.

14. A client as claimed in any of claims 10 - 13 wherein the transmitter is arranged to request, from the Media Access Control layer, the at least one second data block a predetermined time before the expiration of said first repeatable time interval.

15. A Wireless Local Area Network comprising:
at least one access point in communication with a client of any of claims 10 - 14.
